Europäisches Patentamt

European Patent Office

Office européen des brevets

(19)

(11) EP 0 858 068 A2

(12) EUROPEAN PATENT APPLICATION

(43) Date of publication:
12.08.1998 Bulletin 1998/33

(51) Int Cl.$^6$: G10L 5/06

(21) Application number: 98102205.6

(22) Date of filing: 09.02.1998

(84) Designated Contracting States:
AT BE CH DE DK ES FI FR GB GR IE IT LI LU MC NL PT SE
Designated Extension States:
AL LT LV MK RO SI

(30) Priority: 07.02.1997 JP 40102/97

(71) Applicant: NEC CORPORATION
Tokyo (JP)

(72) Inventors:
• Yamada, Eiko
  Minato-ku, Tokyo (JP)
• Hattori, Hiroaki
  Minato-ku, Tokyo (JP)

(74) Representative: Betten & Resch
Reichenbachstrasse 19
80469 München (DE)

(54) Inhibitting reference pattern generating method

(57) Input speech is supplied to an analyzer (10) for conversion to feature vector, which is supplied to an inhibiting speaker selector (40) and also to a feature vector memory(30). An inhibiting speaker selector (40) selects inhibiting speakers by calculating similarities between reference patterns stored in an inhibiting speaker's reference pattern memory (20) and the feature vector of the true speaker, stored in the feature vector memory (30). The inhibiting speakers are selected in the order of smaller distances thereof. Selected inhibiting speaker's reference patterns are supplied to an estimator (50). The estimator (50) obtains mapping functions from inhibiting speaker's feature vector spaces to feature vector space of the true speaker, using the reference patterns supplied from the inhibiting speaker selector and the feature vector of the true speaker, supplied form the feature vector memory (30). The mapping functions thus obtained are supplied to an adapter (60). The adapter (60) adapts the inhibiting speaker's reference patterns selected in the inhibiting speaker selector by using the mapping functions supplied from the estimator (50).

FIG. 1

EP 0 858 068 A2

**Description**

BACKGROUND OF THE INVENTION

The present invention relates to inhibiting reference pattern (or Cohort pattern) generating methods used in speaker verification systems.

In speaker verification, a problem is posed that differences that are generated between additive noise and line characteristics at the time of registration and those at the time of verification, deteriorate the verification performance. To solve this problem, a method utilizing inhibiting speaker's reference patterns has been proposed by Sakoe et al in, for instance, Japanese Laid-Open Patent Publication No. 58-76893 (hereinafter referred to as Literature 1) or Japanese Laid-Open Patent Publication No. 59-178587 (hereinafter referred to as Literature 2). This prior art speaker verification method is performed on the comparison between a distance between a reference pattern of the true speaker and an input speech, and a distance between an inhibiting reference pattern and an input speech. In the second stage, the comparison between a distance between a reference pattern of the true speaker and an input speech, and a predetermined threshold value.

It is described that various environmental differences at the time of registration and at the time of verification, affect likewise the distance between reference pattern of the true speaker and input speech, and the distance between inhibiting speaker's reference pattern and input speech, so that the check using the distance between inhibiting speaker's reference pattern and input speech as threshold in the prior stage, permits speaker verification free from environmental differences at the time of registration and at the time of verification, and thus improves verification performance.

As a method having resort to the same concept as that underlying the above proposed method, a likelihood normalization method based on inhibiting speaker's reference patterns is described in A. Higgins, L. Bahler, and J. Porter, "Speaker Verification Using Randomized Phrase Promoting", Digital Signal Processing, 1, pp. 89-106, 1991 (hereinafter referred to as Literature 3) and Aaron E. Rosenberg, Joel DeLong, Chin-Hui Lee, Biing-Hwang Juang, Frank K Soong, "The Use of Cohort Normalized Scores for Speaker Verification", ISSLP 92, pp. 599-602, 1992 (hereinafter referred to as Literature 4).

The likelihood normalization based on inhibiting speaker's reference patterns will now be described.

This normalization employs N selected inhibiting speakers, whose speeches more closely resemble speech of the speaker to be verified, and distance calculation for verification is performed by subtracting inhibiting speaker's likelihoods from likelihood of the speaker to be verified. The inhibiting speaker's likelihoods to be subtracted may be various conceivable values, such as their maximum or mean values. It is thought that the environmental differences at the time of registration and at the time of verification can be removed by subtracting the inhibiting speaker's likelihoods from the likelihood of the speaker to be verified. This is so because the environmental differences affect likewise the likelihood of the speaker to be verified and the inhibiting speaker's likelihoods.

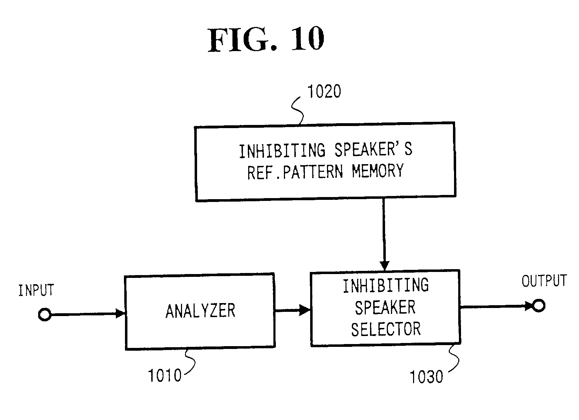

Fig. 10 is a block diagram illustrating the prior art inhibiting speaker's reference pattern generating method. In this prior art inhibiting speaker's reference pattern (or Cohort pattern) generating method, an analyzer 1010 converts input speech of the true speaker into feature vector, and an inhibiting speaker selector 1030 selects inhibiting speakers in the order of higher similarities between feature vector and inhibiting speaker's reference patterns, which are stored in an inhibiting speaker's reference pattern memory 1020.

In this prior art method, some of preliminarily prepared inhibiting speakers are selected, whose reference patterns are similar to registered speech of the true speaker. However, the environment under which the speech of the true speaker is registered, is different from those under which the selected inhibiting speakers are prepared. Filling up such differences requires a large number of inhibiting speakers.

Another problem in the prior art is encountered in case when different words or contents are spoken by the true speaker and inhibiting speaker. In this case, continuous phone recognition of an unknown content speech of the true speaker are performed, and inhibiting speaker's reference patterns corresponding to unknown content speeches are generated by connecting phone patterns by using the result of the recognition. In this case, however, the quality of the inhibiting speaker's reference patterns is influenced by the continuous phone recognition performance.

SUMMARY OF THE INVENTION

An object of the present invention, there is provided an inhibiting reference pattern (or Cohort pattern) generating method with high speaker verification accuracy with fewer inhibiting speaker's reference patterns even when the speaker verification is performed in connection with different environments at the time of registration and at the time of verification.

Another object of the present invention, there is provided an inhibiting reference pattern (or Cohort pattern) generating method capable of creating accurate inhibiting speaker's reference patterns even when different words are uttered by the true speaker and inhibiting speakers.

According to a first aspect of the present invention, there is provided an inhibiting speaker's reference pattern generating system comprising: an analyzer for converting an input speech of the true speaker into feature vectors; a feature vector memory for storing the feature vector obtained in the analyzer; an inhibiting speaker's reference pattern memory with one or more inhibiting speaker's reference patterns stored therein; an inhibiting speaker selector for calculating similarity or similarities between the inhibiting speaker's reference pattern or patterns stored in the inhibiting speaker's reference pattern memory and the feature vector obtained in the analyzer and selecting one or more inhibiting speakers; an estimator for obtaining mapping function or functions from inhibiting speaker's feature vector space or spaces to feature vector space of the true speaker, by using the selected inhibiting speaker's reference pattern or patterns and the feature vector of the true speaker, stored in the feature vector memory; and an adapter for adapting the inhibiting speaker's reference pattern or patterns stored in the inhibiting speaker's reference pattern memory on the basis of the mapping function or functions obtained in the estimator.

According to a second aspect of the present invention, there is provided an inhibiting speaker's reference pattern generating system comprising: an analyzer for converting an input speech of the true speaker into feature vectors; a feature vector memory for storing the feature vector obtained in the analyzer; an inhibiting speaker's reference pattern memory with one or more inhibiting speaker's reference patterns stored therein; an inhibiting speaker selector for calculating similarity or similarities between the inhibiting speaker's reference pattern or patterns stored in the inhibiting speaker's reference pattern memory and the feature vector obtained in the analyzer and selecting one or more inhibiting speakers; an estimator for obtaining mapping function or functions from inhibiting speaker's feature vector space or spaces to feature vector space of the true speaker, by using the selected inhibiting speaker's reference pattern or patterns and feature vector of the speaker to be verified, obtained from a first speech of known content stored in the feature vector memory; an adapter for adapting the inhibiting speaker's reference pattern or patterns stored in the inhibiting speaker's reference pattern memory on the basis of the mapping function or functions obtained in the estimator; an alignment estimator for estimating alignment or alignments of feature vector of the true speaker, obtained from a second speech of unknown content thereof stored in the feature vector memory, by using the adapted inhibiting speaker's reference pattern or patterns obtained in the adapter, and producing inhibiting speaker's reference pattern or patterns corresponding to the second speech on the basis of the estimated alignment or alignments.

According to a third aspect of the present invention, there is provided an inhibiting speaker's reference patter generating system comprising: an analyzer for converting an input speech of the true speaker into feature vectors; a feature vector memory for storing the feature vector obtained in the analyzer; an inhibiting speaker's reference pattern memory with one or more inhibiting speaker's reference patterns stored therein; an inhibiting speaker selector for calculating similarity or similarities between the inhibiting speaker's reference pattern or patterns stored in the inhibiting speaker's reference pattern memory and the feature vector obtained in the analyzer and selecting one or more inhibiting speakers; an estimator for obtaining mapping function or functions from inhibiting speaker's feature vector space or spaces to feature vector space of the true speaker, by using the selected inhibiting speaker's reference pattern or patterns and feature vector of the true speaker, obtained from a first speech of known content thereof stored in the feature vector memory; an adapter for adapting the inhibiting speaker's reference pattern or patterns stored in the inhibiting speaker's reference pattern memory on the basis of the mapping function or functions obtained in the estimator; an alignment estimator for estimating alignment or alignments of feature vector of the true speaker, obtained from a second speech of unknown content thereof stored in the feature vector memory, by using reference pattern or patterns of the inhibiting speaker or speakers selected in the inhibiting speaker selector, and generating inhibiting speaker's reference pattern or patterns corresponding to the second speech on the basis of the estimated alignment or alignments; an adapter for adapting the inhibiting speaker's reference pattern or patterns generated in the alignment estimator on the basis of the estimated mapping function or functions.

According to a fourth aspect of the present invention, there is provided an inhibiting speaker's reference pattern generating system comprising: an analyzer for converting an input speech of the true speaker into feature vectors; a feature vector memory for storing the feature vector obtained in the analyzer; an inhibiting speaker's reference pattern memory with one or more inhibiting speaker's reference patterns stored therein; an inhibiting speaker selector for calculating similarity or similarities between the inhibiting speaker's reference pattern or patterns stored in the inhibiting speaker's reference pattern memory and the feature vector obtained in the analyzer and selecting one or more inhibiting speakers; an estimator for obtaining mapping function or functions from feature vector space of the true speaker to inhibiting speaker's feature vector space or spaces, by using the selected inhibiting speaker's reference pattern or patterns and feature vector of the true speaker stored in the feature vector memory; a reference pattern generator for creating reference pattern of the true speaker by using the feature vector stored in the feature vector memory; and an adapter for adapting the speaker's reference pattern or patterns obtained in the reference pattern generator on the basis of the mapping function or functions obtained in the estimator.

According to a fifth aspect of the present invention, there is provided an inhibiting speaker's reference pattern generating system comprising: an analyzer for converting an input speech of the true speaker into feature vectors; a feature vector memory for storing the feature vector obtained in the analyzer; an inhibiting speaker's reference pattern memory with one or more inhibiting speaker's reference patterns stored therein; an estimator for obtaining mapping function or functions from inhibiting speaker's feature vector space or spaces to feature vector space of the true speaker by using the feature vector obtained in the analyzer and the inhibiting speaker's reference pattern or patterns stored in the inhibiting speaker's reference pattern memory; an adapter for adapting the inhibiting speaker's reference pattern or patterns stored in the inhibiting speaker's reference pattern memory on the basis of the mapping function or functions obtained in the estimator; and inhibiting speaker selector for calculating similarities between the adapted reference pattern or patterns obtained in the adapter and the feature vector of the true speaker, stored in the feature vector memory.

According to a sixth aspect of the present invention, there is provided an inhibiting speaker's reference pattern generating system comprising: an analyzer for converting an input speech of the true speaker into feature vectors; a feature vector memory for storing the feature vector obtained in the analyzer; an inhibiting speaker's reference pattern memory with one or more inhibiting speaker's reference patterns stored therein; an estimator for estimating mapping function or functions from inhibiting speaker's feature vector space or spaces to feature factor of the true speaker, by using the converted feature vector of the true speaker, obtained from a first speech of known content and the inhibiting speaker's reference pattern or patterns stored in the inhibiting speaker's reference pattern memory; an adapter for adapting the inhibiting speaker's reference pattern or patterns stored in the inhibiting speaker's reference pattern memory on the basis of the mapping function or functions obtained in the estimator; an alignment estimator for estimating alignment or alignments of feature vector of the true speaker, obtained from a second speech of unknown content stored in the feature vector memory, by using the adapted reference pattern or patterns obtained in the adapter, and generating inhibiting speaker's reference pattern or patterns corresponding to the second speech; and an inhibiting speaker selector for calculating similarity or similarities between the inhibiting speaker's reference pattern or patterns generated in the alignment estimator and the second speech feature vector of the true speaker, stored in the feature vector memory.

According to a seventh aspect of the present invention, there is provided an inhibiting speaker's reference pattern generating system comprising: an analyzer for converting an input speech of the true speaker into feature vectors; a feature vector memory for storing the feature vector obtained in the analyzer; an inhibiting speaker's reference pattern memory with one or more inhibiting speaker's reference patterns stored therein; an estimator for estimating mapping function or functions from inhibiting speaker's feature vector space or spaces to feature factor of the true speaker, by using the converted feature vector of the true speaker, obtained from a first speech of known content and the inhibiting speaker's reference pattern or patterns stored in the inhibiting speaker's reference pattern memory; an alignment estimator for estimating alignment or alignments of feature vector of the true speaker, obtained form a second speech of unknown content stored in the feature vector memory, by using the inhibiting speaker's reference pattern or patterns stored in the inhibiting speaker's reference memory, and creating inhibiting speaker's reference pattern or patterns corresponding to the second speech on the basis of the estimated alignment or alignments; an adapter for adapting the reference pattern or patterns obtained in the alignment estimator by using the mapping function or functions estimated in the estimator; and an inhibiting speaker selector for calculating similarity or similarities between the inhibiting speaker's reference pattern or patterns stored in the inhibiting speaker's reference pattern memory and the feature vector stored in the feature vector memory and selecting one or more inhibiting speakers.

According to an eighth aspect of the present invention, there is provided an inhibiting speaker's reference pattern generating system comprising: an analyzer for converting an input speech of the true speaker into feature vectors; a feature vector memory for storing the feature vector obtained in the analyzer; an inhibiting speaker's reference pattern memory with one or more inhibiting speaker's reference patterns stored therein; an estimator for obtaining mapping function or functions from feature vector space of the true speaker to inhibiting speaker's feature vector space or spaces, by using the converted feature vector obtained in the analyzer and the inhibiting speaker's reference pattern or patterns stored in the inhibiting speaker's reference pattern memory; a reference pattern generator for generating reference pattern of the true speaker by using the feature vector of the true speaker, stored in the feature vector memory; an adapter for adapting the reference pattern of the true speaker, obtained in the reference pattern generator, on the basis of the mapping function or functions obtained in the estimator; and an inhibiting speaker selector for calculating similarity or similarities between the adapted reference pattern or patterns obtained in the adapter and the feature vector of the true speaker, stored in the feature vector memory.

According to a ninth aspect of the present invention, there is provided a speaker verifying system comprising: an analyzer for converting an input speech of the speaker to be verified into feature vectors; an inhibiting reference pattern generator including above the feature vector memory, inhibiting speaker reference pattern memory, inhibiting speaker selector, estimator and reference pattern generator; a speaker's reference pattern memory with one or more speaker's reference patterns stored therein; a distance calculator for normalizing distance or distances by subtracting the distance between the feature vector or vectors and the reference pattern or patterns of the inhibiting speaker or speakers from the distance between the feature vector and the reference pattern of the true speaker on the basis of the converted feature vector of the speaker to be verified, the inhibiting speaker's reference pattern or patterns generated in the inhibiting speaker's reference pattern generator and the reference pattern of the true speaker, stored in a reference pattern memory; and a verifier for verifying the speaker to be verified on the basis of the normalized distance or distances calculated in the distance calculator.

According to another aspect of the present invention, there is provided an inhibiting speaker's reference pattern generating method which performs the above processings.

According to other aspect of the present invention, there is provided a recording medium storing programs which is to be performed by processor according to the above processings.

Other objects and features will be clarified from the following description with reference to attached drawings.

## BRIEF DESCRIPTION OF THE DRAWINGS

Fig. 1 is a block diagram showing a first embodiment of the invention;
Fig. 2 is a block diagram showing a second embodiment of the invention;
Fig. 3 is a block diagram showing a third embodiment of the invention;
Fig. 4 is a view showing a fourth embodiment of the invention;
Fig. 5 is a view showing a fifth embodiment of the invention;
Fig. 6 is a view showing a sixth embodiment of the invention;
Fig. 7 is a view showing a seventh embodiment of the invention;
Fig. 8 is a view showing an eighth embodiment of the invention;
Fig. 9 is a view showing a speaker verification system for carrying out the embodiments of the inhibiting speaker's reference pattern generating system; and
Fig. 10 is a block diagram illustrating the prior art inhibiting speaker's reference pattern generating method.

## PREFERRED EMBODIMENTS OF THE INVENTION

Preferred embodiments of the present invention will now be described.

In the first place, the distance normalization using inhibiting speaker's reference patterns will be described in connection with the case, in which likelihood is a measure of distance. The following description also applies to the case, in which the likelihood is replaced by distance of reference pattern.

In the likelihood normalization based on inhibiting speaker's reference patterns, speakers having voice characters resembling that of the true speaker are selected as inhibiting speakers, and distance calculation for the speaker verification is executed by subtracting inhibiting speaker's likelihoods from likelihood of the speaker to be verified. The inhibiting speaker's likelihoods may be various values, such as their maximum or mean value. The likelihood normalization based on inhibiting speaker's reference patterns is expressed by following formula (1).

$$Score = \log(p(O/I)) - \underset{k}{stat}\log(p(O/c_k(I))) \qquad (1)$$

where log (p(O/I)) is the likelihood of probability that observation vector O for a model of the speaker I is observed, and log (p(O/ck(I)) is the likelihood of probability that observation vector O for the reference pattern of k-th inhibiting speaker in inhibiting speaker set C(I) with respect to the speaker I is observed.

stat represents various statistical calculation methods, such as one in which the maximum or mean inhibiting speaker's likelihood is taken. Score represents the normalized likelihood. It is thought that the environmental differences at the time of registration and at the time of verification can be removed by subtracting the inhibiting speaker's likelihood from the likelihood of the speaker to be verified, because the environmental differences affect likewise the likelihood of the speaker to be verified and the inhibiting speaker's likelihood.

As discussed before, the prior art method has the problems that a large number of inhibiting speaker's reference patterns should be to be able to cope with a variety of line characteristics, and that accurate inhibiting speaker's reference patterns cannot be generated in case when different words or contents are spoken by the true speaker and inhibiting speakers.

In order to solve these problems, this invention seeks to provide an inhibiting speaker's reference pattern generating method utilizing adaptation, and also a speaker verification apparatus using the same method. The adaptation utilized may be fast environmental adaptation (RIALISE method) as proposed by Takagi, "Speech Recognition with Environmental Adaptation by Spectrum Equalization", Onkyoh Kohron, pp. 173-174, 1994/3 (hereinafter referred to as Literature 5), tree structured speaker adaptation (ACTS) as proposed by Shinoda, "Speaker Adaptation Using Tree-Structured Probability Density Function", Onkyo Kohron, pp. 49-50, March 1995 (hereinafter referred to as Literature 6), speaker adaptation using spectral interpolation as proposed by Shinoda, "Speaker Adaptation for Demi-Syllable Based Speech Recognition Using HMM", Onkyo Kohron, pp. 23-24, 1991/9 (hereinafter referred to as Literature 7).

The fast environmental adaptation will be described hereinunder. The fast environmental adaptation is a method, in which difference of line distortion or additional noise between reference pattern and speech are taken out on the spectral axis by using the speech itself at the time of the recognition, and reference patterns are adapted to the environment, under which the speech is spoken.

Denoting spectral vectors of non-adapted reference patterns by W(t), and spectral vectors of the reference patterns after the adaptation by W^(t), the adaptation is expressed as:

$$\hat{W} = Nv \tag{2}$$

$$\hat{W} = \frac{Sv\text{-}Nv}{Sw\text{-}Nw}(W(t)\text{-}Nw) + Nv \tag{3}$$

The formula (2) represents an adaptation concerning noise part of the reference patterns, and the formula (3) represents speech part of the reference patterns. Sw is the mean spectrum of speech model of the reference patterns, Nw is the mean spectrum of noise model of the reference patterns, Sv is the mean spectrum of input speech corresponding to speech interval, and Nv the mean spectrum of input speech corresponding to noise interval.

The method may be used in various conceivable forms or modes for the inhibiting speaker's reference pattern (or Cohort pattern) production.

In a first method, mapping functions from inhibiting speaker's feature vector spaces to feature vector space of the true speaker, are obtained after inhibiting speaker selection, and inhibiting speaker's reference patterns are adapted by using the mapping functions thus obtained.

In this method, the adaptation is performed by using speech of the true speaker at the time of registration, so that it is possible to produce new inhibiting speaker's reference patterns under environments including that at the time of registration. It is thus possible to remove environmental differences (due to additive noise, line characteristics, etc.) between reference pattern of the true speaker and inhibiting speaker's reference patterns, and obtain higher speaker verification accuracy with fewer inhibiting speaker's reference patterns.

In a second method, mapping functions from inhibiting speaker's feature vector space to feature vector space of the true speaker, are obtained by using a first speech (of known content) of the true speaker after inhibiting speaker selection, inhibiting speaker's reference patterns are adapted by using the mapping functions thus obtained, and inhibiting speaker's reference patterns corresponding to a second speech (of unknown content) of the true speaker are generated by using the adapted reference patterns.

According to this second method, inhibiting speaker's reference patterns can be generated even in case when different words are uttered by the true speaker and inhibiting speakers. In this case, adaptation can be performed by using continuous phone recognition of an unknown content speech of the true speaker and estimating mapping functions on the basis of the recognized speech content. But, the accuracy of the mapping function estimation is low. Nevertheless, this method has an advantage that highly accurate inhibiting speaker's reference patterns can be generated because the mapping function estimation can be obtained by using a known content speech.

In a third method, mapping functions from inhibiting speaker's feature vector spaces to feature vector space of the true speaker are obtained by using a first speech (of known content) of the true speaker after inhibiting speaker selection, and inhibiting speaker's reference patterns concerning a second speech (of unknown content) of the true speaker are adapted by using the mapping functions thus obtained.

This third method has substantially the same advantages as the second method. However, in case when SNR is low at the time of registration so that satisfactory mapping function estimation cannot be obtained, more accurate inhibiting speaker's reference patterns can be generated in the third method than in the second method.

In a fourth method, mapping functions from feature vector space of the true speaker to inhibiting speaker's feature vector space are obtained, and reference pattern of the true speaker is adapted by using the mapping functions thus obtained.

This fourth method has an advantage that time structure features of the reference pattern of the true speaker at the time of registration can be reflected on inhibiting speaker's reference patterns. The fourth method also has the same effects as mentioned above in case when different words contents are spoken by the speaker to be verified and inhibiting speakers.

In a fifth method, inhibiting speaker's reference patterns used for the mapping function estimation in the above first to fourth methods, are contained features of two or more speakers.

In this fifth method, since the reference patterns used for the mapping function estimation contain features of two or more speakers, this reference patterns can be expressed as a reference pattern having features of plural speakers with a single reference pattern. It is possible to obtain stable mapping function with fewer inhibiting speaker's reference patterns, and thus obtain higher speaker verification accuracy with less computational amount.

In a sixth method, the sequence of parts for inhibiting speaker selection and parts for adaptation in the above first to fifth methods is varied. More specifically, reference pattern of the true speaker is adapted by using all inhibiting speaker's reference patterns, and adapted inhibiting speaker's reference patterns are selected in the order of shorter distances thereof from the reference pattern of the true speaker.

This sixth method is the same in principle as the first to fifth methods. Besides, the method has an advantage that more accurate inhibiting speaker's reference patterns can be generated because it is possible to take the accuracy at the time of the adaptation into considerations.

By using the above forms of the inhibiting speaker's reference pattern (or Cohort pattern) generating method according to the invention, higher speaker verification accuracy can be obtained with fewer inhibiting speaker's reference patterns. In addition, it is possible to easily create accurate inhibiting speaker's reference patterns even when different content speeches are used at the time of the inhibiting speaker selection and the mapping function estimation, and at the time of the adaptation.

The above forms of the method according to the invention will be described in greater detail in connection with embodiments of the invention with reference to the accompanying drawings.

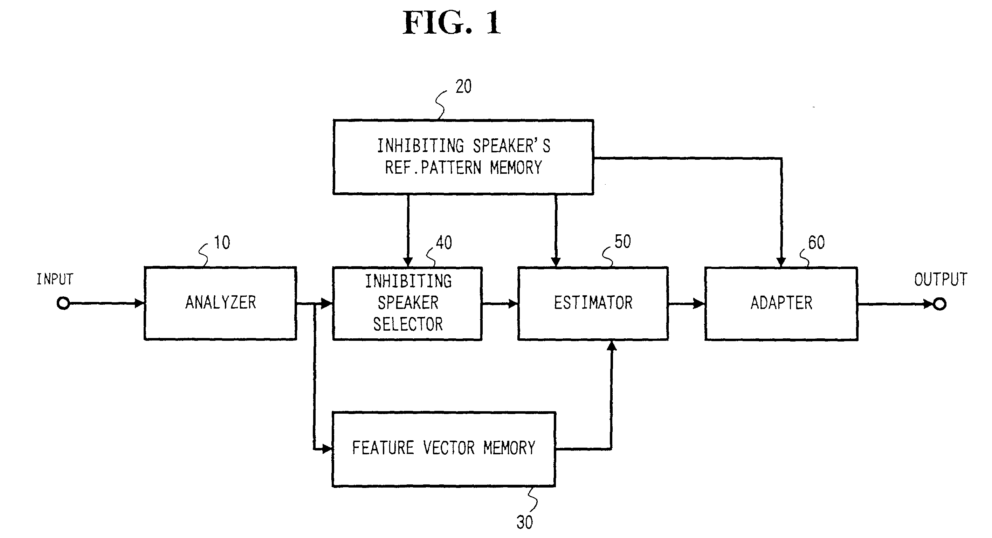

Fig. 1 is a block diagram showing a first embodiment of the invention. In this embodiment, mapping functions from the inhibiting speaker's feature vector spaces to feature vector space of the true speaker is obtained after inhibiting speaker selection, and inhibiting speaker's reference patterns are adapted by using the mapping functions thus obtained.

Referring to Fig. 1, input speech of the true speaker is supplied to an analyzer 10. The analyzer 10 converts the input speech into feature vector, which is supplied to a feature vector memory 30 and also to an inhibiting speaker selector 40. The feature vector may be cepstrum, delta cepstrum or the like. For cepstrum and delta cepstrum, Furui, "Digital Speech Processing", Tokai University Publishing Association, pp. 44-47, 1985 (hereinafter referred to as Literature 8) may be referred to.

The inhibiting speaker selector 40 calculates distance between the feature vector of the true speaker, supplied form the analyzer 10, and each inhibiting speaker's reference pattern supplied from an inhibiting speaker's reference pattern memory 20, and selects inhibiting speaker's reference patterns in the order of smaller distances thereof. The distance calculation may be performed by DP matching proposed by Sakoe and Chiba, "Continuous Speech Recognition based on Time Normalization Utilizing Dynamic Programming", Onkyo Journal, 27.9, pp. 483-490, September 1984 hereinafter referred to as Literature 9), or by using Viterbi algorithm proposed by L. R. Rabiner and M. M. Sondhi, "On the Application of Vector Quantization and Hidden Markov Models to Speaker-Independent, Isolated Work Recognition", pp. 1075-1105 (hereinafter referred to as Literature 10).

In the inhibiting speaker's reference pattern memory 20, various reference patterns such as those containing features of each speaker or those containing features of two or more speakers are stored. The selected inhibiting speaker's reference patterns are supplied to an estimator 50.

The estimator 50 obtains mapping functions from inhibiting speaker's feature vector spaces to feature vector space of the true speaker, using the selected inhibiting speaker's reference patterns supplied from the inhibiting speaker's reference pattern memory 40 and feature vector of the true speaker, supplied from the feature vector memory 30.

The mapping functions to be obtained depend on the adapting method used. In the fast environmental adaptation, for instance, the mapping function is Sw representing the mean spectrum of reference pattern speech models, Nw representing the mean spectrum of noise parts of the reference patterns, Sv representing the mean spectrum of input speech corresponding to speech interval, or Nv representing the mean spectrum of input speech corresponding to noise interval in the above formula (3). For details, the Literature 5 may be referred to.

In the tree-structured speaker adaptation, the mapping functions to be obtained are of inter-node mapping from inhibiting speaker's reference patterns to reference pattern of the true speaker. In the speaker adaptation using spectral interpolation , the mapping functions are spectral mapping functions from inhibiting speaker's feature vector spaces to feature vector space of the true speaker. For details of inter-node mapping functions in the tree-structured speaker adaptation, the Literature 6 may be referred to. (Although the functions are not shown in detail in the present application text, formula (1) shown in the Literature 6 may be referred to for details.) For details of spectral mapping functions in the speaker adaptation using spectral interpolation, the Literature 7 may be referred to. (Although the functions are not shown in details in the application text, formula (1) shown in the Literature 7 may be referred to for details.) The mapping functions obtained in the estimator 50 are supplied to an adapter 60.

The adapter 60 adapts the selected inhibiting speaker's reference patterns supplied from the inhibiting speaker selector 40 on the basis of the mapping functions supplied from the estimator 50. In the case of employing the fast environmental adaptation, the reference patterns are adapted in accordance with the formulas (2) and (3). In the case of employing the tree-structured speaker adaptation, the reference patterns are adapted in a method shown in the Literature 6. (The function formula is not shown in the application text, but for its details formula (4) shown in the Literature 6 may be referred to.) In the case of employing speaker adaptation using spectral interpolation, the reference patterns are adapted by using a method shown in the Literature 7. (The function formula is not shown in the application text, but for its details formula (2) shown in the Literature 7 may be referred to.) The new inhibiting speaker's reference patterns obtained by the adaptation in the adapter 60, are provided as output.

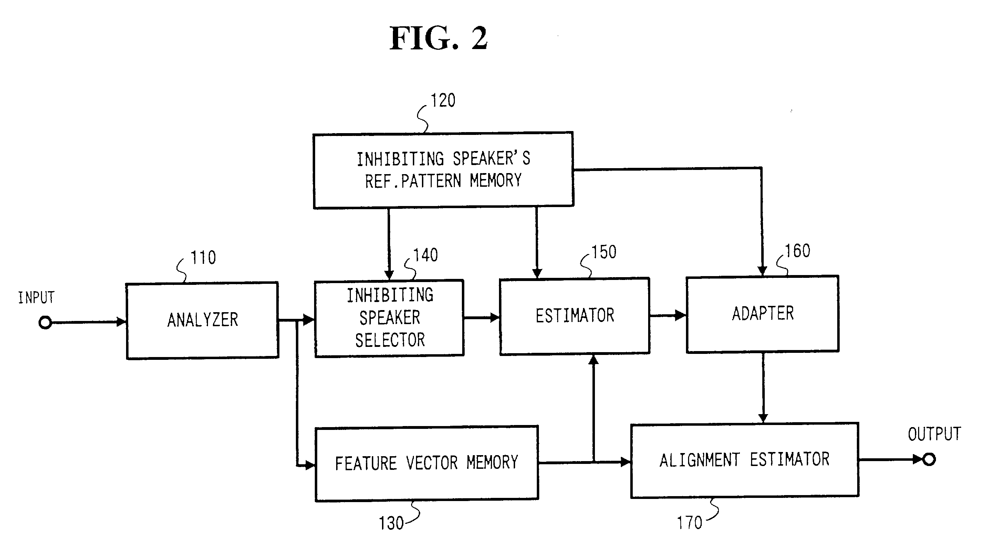

Fig. 2 is a block diagram showing a second embodiment of the invention. In this embodiment, mapping functions from inhibiting speaker's feature vector spaces to feature vector space of the true speaker are obtained using a first speech (of known content) of the true speaker after inhibiting speaker selection, then inhibiting speaker's reference patterns are adapted by using the mapping functions thus obtained, and then inhibiting speaker's reference patterns corresponding to a second speech (of unknown content) of the true speaker are generated by using the adapted inhibiting speaker's reference patterns.

Input first and second speeches (of known and unknown contents, respectively) of the true speaker are supplied to an analyzer 110. The input speeches supplied to the analyzer 110 are converted into feature vectors, which are supplied to a feature vector memory 130. The first speech feature vector is supplied to an inhibiting speaker selector 140.

The inhibiting speaker selector 140 calculates distances between the feature vector of the true speaker, supplied form the analyzer 110, and inhibiting speaker's reference patterns supplied from the inhibiting speaker's reference pattern memory 120, and selects inhibiting speaker's reference patterns in the order of smaller distances thereof. The selected inhibiting speaker's reference patterns are supplied to an estimator 150.

The estimator 150 obtains mapping functions from inhibiting speaker's feature vectors to feature vector of the true speaker from the selected inhibiting speaker's reference patterns supplied from the inhibiting speaker selector 140 and first speech feature vector of the true speaker, supplied from the feature vector memory 130. The mapping functions thus obtained are supplied to an adapter 160.

The adapter 160 adapts the selected inhibiting speaker's reference patterns supplied from the inhibiting speaker selector 140 on the basis of the mapping functions supplied from the estimator 150. The adapted reference patterns are supplied to an alignment estimator 170.

The alignment estimator 170 estimates alignments of the second speech feature vector of the true speaker, supplied from the feature vector memory 130 using the reference patterns supplied from the adapter 160. The estimation is performed by using DP matching (as detailed in the Literature 9) or Viterbi algorithm (as detailed in the Literature 10).

The alignment estimator 170 then generates inhibiting speaker's reference patterns corresponding to the second speech of the true speaker by connecting reference patterns supplied from the adapter 160 in the order of sound elements corresponding to the estimated alignment or alignments, and generated inhibiting reference patterns are supplied as output.

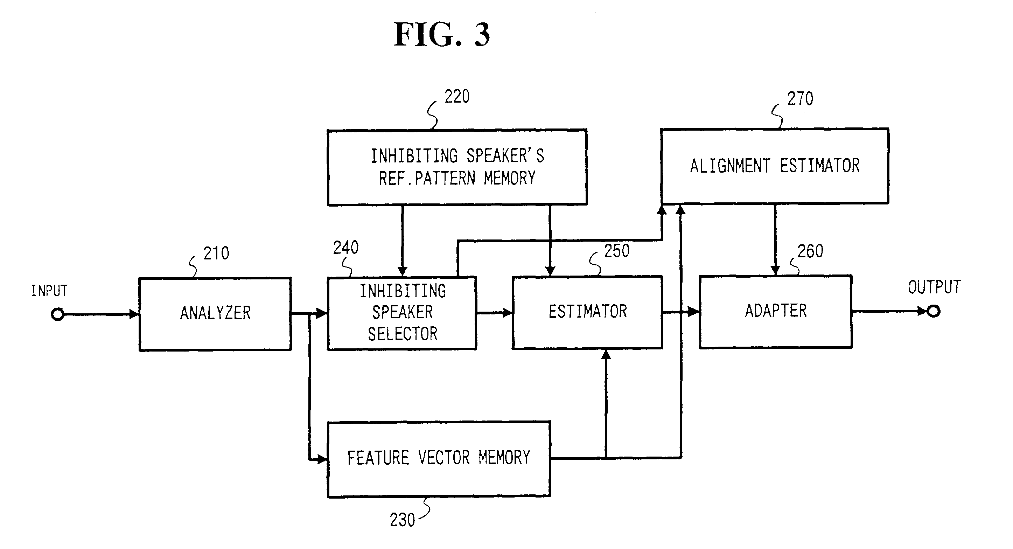

Fig. 3 is a block diagram showing a third embodiment of the invention. In this embodiment, mapping functions of inhibiting speaker's feature vector spaces to feature vector space of the true speaker, are generated by using a first speech (of known content) of the true speaker after inhibiting speaker selection, then reference patterns corresponding to a second speech (of unknown content) of the true speaker are generated by using the non-adapted inhibiting speaker's reference patterns, and the reference patterns thus generated are adapted by using the estimated mapping functions.

Input first and second speeches (of known and unknown contents, respectively) of the true speaker are supplied to an analyzer 210. The input speeches supplied to the analyzer 210 are converted into feature vectors, which are supplied to a feature vector memory 230. The first speech feature vector is also supplied to an inhibiting speaker selector 240.

The inhibiting speaker selector 240 calculates distances between feature vector of the true speaker, supplied from the analyzer 210, and inhibiting speaker's reference patterns supplied from the inhibiting speaker's reference pattern memory 220, and selects inhibiting speaker's reference patterns in the order of smaller distances thereof. The selected inhibiting speaker's reference patterns are supplied to an estimator 250.

The estimator 250 obtains mapping functions from inhibiting speaker's feature vector spaces to feature vector space of the true speaker, using the selected inhibiting speaker's reference patterns supplied from the inhibiting speaker selector 240 and the first speech feature vector of the true speaker, supplied from the feature vector memory 230. The mapping functions thus obtained are supplied to an adapter 260.

The alignment estimator 270 estimates alignments of the second speech feature factor of the true speaker, supplied from the feature vector memory 230 using the reference patterns supplied from the inhibiting speaker's reference pattern memory 220. The alignment estimator 270 then generates inhibiting speaker's reference patterns corresponding to the second speech of the true speaker by connecting reference patterns supplied from the inhibiting speaker's reference pattern memory 220 in the order of phone corresponding to the estimated alignments. The inhibiting speaker's reference patterns thus generated are supplied to an adapter 260.

The adapter 260 adapts the inhibiting speaker's reference patterns generated in the alignment estimator 270 on the basis of the mapping functions supplied from the estimator 250, and adapted inhibiting reference patterns are supplied as output.

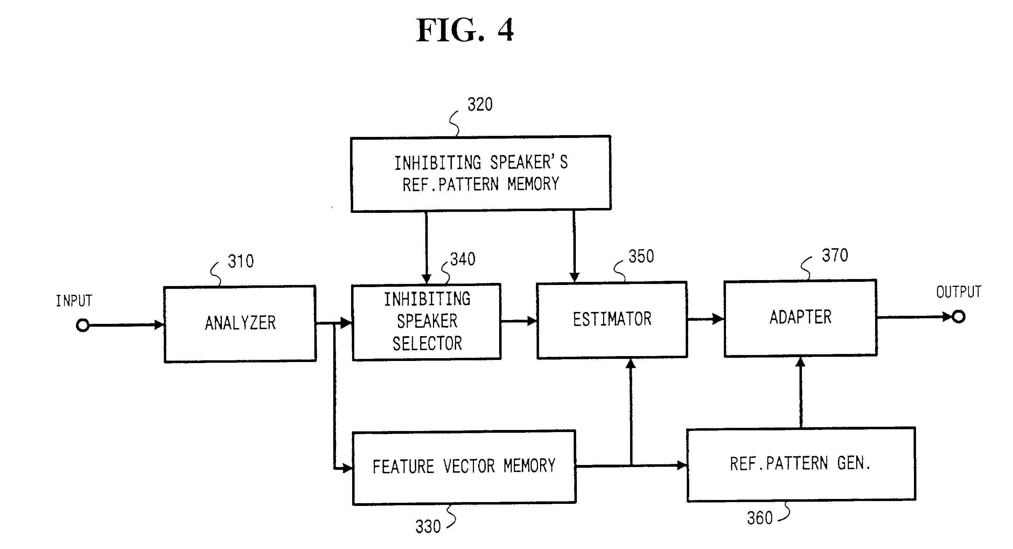

Fig. 4 is a view showing a fourth embodiment of the invention. In this embodiment, mapping functions from feature vector space of the true speaker to inhibiting speaker's feature vector spaces are obtained after inhibiting speaker selection, and reference pattern of the true speaker is adapted by using the mapping functions thus obtained.

Input speech of the true speaker is supplied to an analyzer 310. The input speech supplied to the analyzer 310 is converted to feature vector, which is supplied to a feature vector memory 330 and also to an inhibiting speaker selector 340.

The inhibiting speaker selector 340 calculates distances between feature vector of the true speaker, supplied from the analyzer 310, and inhibiting speaker's reference patterns supplied from the inhibiting speaker's reference pattern memory 320, and selects inhibiting speaker's reference patterns in the order of smaller distances thereof. The selected inhibiting speaker's reference patterns are supplied to an estimator 350.

The estimator 350 obtains mapping functions from feature vector of the true speaker to inhibiting speaker's feature vector spaces, using the inhibiting speaker's reference patterns supplied from the inhibiting speaker selector 340 and feature vector of the true speaker, supplied from the feature vector memory 330. The mapping functions thus obtained are supplied to an adapter 370.

A reference pattern generator 360 generates reference pattern of the true speaker by using the feature vector thereof supplied from the feature vector memory 330. In the case where reference pattern is HMM (Hidden Markov Model), S. E. Levinsin, L. R. Rabinar, and M. M. Sondhi, "An Introduction to the Application of the Theory of Probability Functions of Markov Process to Automatic Speech Recognition", The Bell System Technical Journal Vol. 62, No. 4, 1983, pp. 1035-1074 (hereinafter referred to as Literature 11), the reference pattern is produced by studying HMM, with the feature vector of the true speaker used as training data, and with HMM stored in the reference pattern generator 360 used as initial HMM. The training algorithm may be forward pass algorithm as proposed by Nakagawa, "Speech Recognition based on Probability Models", IECE Japan, pp. 40-44, 1988 (hereinafter referred to as Literature 12) or speaker adaptation using spectral interpolation detailed in the Literature 7.

The studied HMM is the generated reference pattern. In the case where the reference pattern is a template one, the feature vector itself is the reference pattern. The generated reference pattern is supplied to an adapter 370.

The adapter 370 adapts the reference pattern of the true speaker, supplied from the reference pattern generator 360, on the basis of the mapping functions supplied from the estimator 350. Adapted inhibiting speaker's reference patterns are provided as output. This method is applicable even in the case where different contents are uttered at the time of the mapping function estimation and at the time of the adaptation.

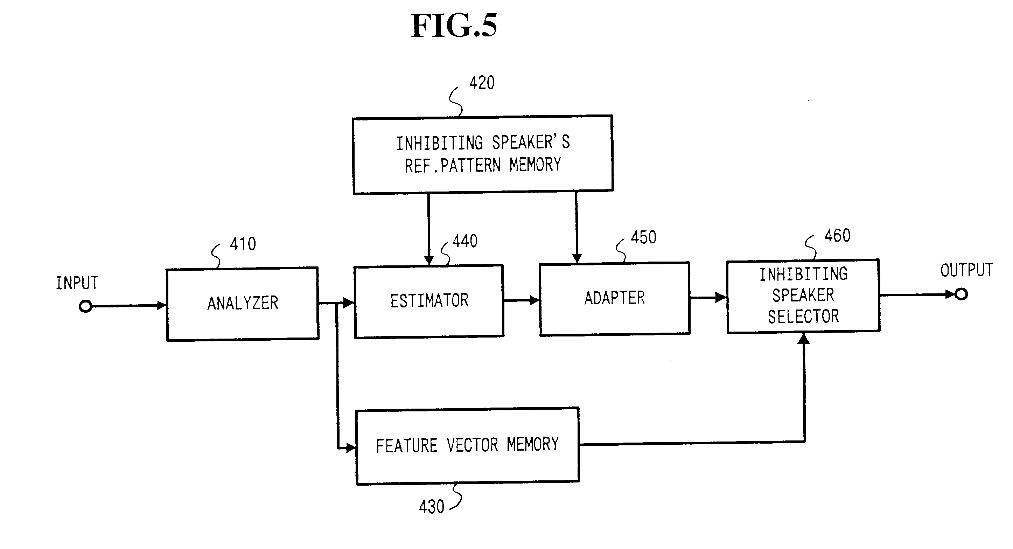

Fig. 5 is a view showing a fifth embodiment of the invention. In this embodiment, mapping functions from inhibiting speaker's feature vector spaces to vector feature space of the true speaker are obtained, inhibiting speaker's reference patterns are adapted by using the mapping functions thus obtained, and inhibiting speakers are selected after adaptation.

Input speech of the true speaker is supplied to an analyzer 410. The input speech supplied to the analyzer 410 is converted into feature vector, which is supplied to a feature vector memory 430 and also to an estimator 440.

The estimator 440 obtains mapping functions from inhibiting speaker's feature vector spaces to feature vector space of the true speaker, by using inhibiting speaker's reference patterns supplied from an inhibiting speaker's reference pattern memory 420 and the feature vector of the true speaker, supplied from the analyzer 410. The mapping functions thus obtained are supplied to an adapter 450.

The adapter 450 adapts inhibiting speaker's reference patterns supplied from the inhibiting speaker's reference pattern memory 420. The adapted reference patterns are supplied to an inhibiting speaker selector 460.

The inhibiting speaker selector 460 calculates distance between the adapted reference patterns supplied from the adapter 450 and the feature vector of the true speaker, supplied from the feature vector memory 430, and selects adapted inhibiting speaker's reference patterns in the order of smaller distances thereof. The selected reference patterns are provided as output.

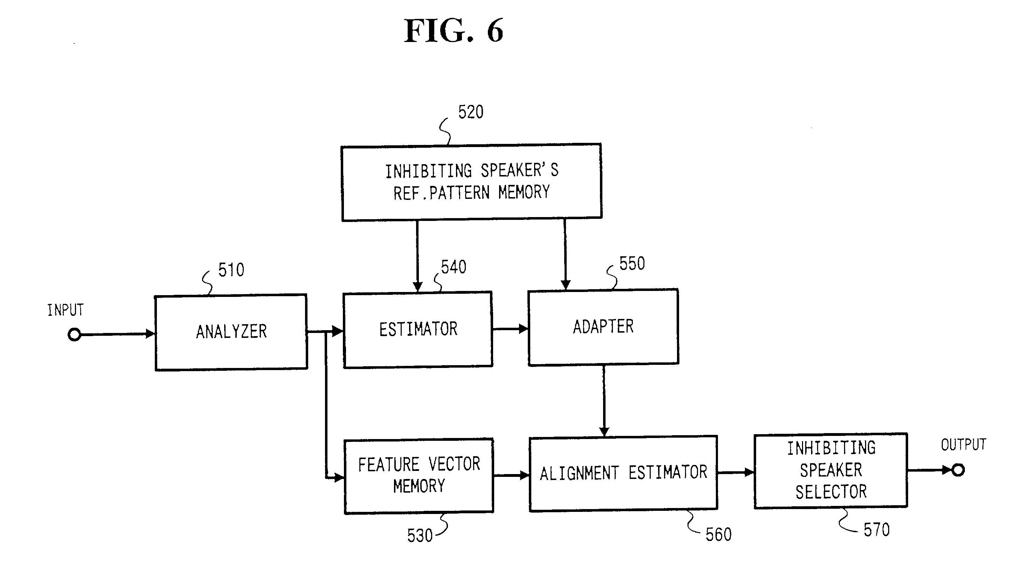

Fig. 6 is a view showing a sixth embodiment of the invention. In this embodiment, mapping functions from inhibiting speaker's feature vector spaces to feature vector space of the true speaker are obtained by using a first speech (of known content) of the true speaker, inhibiting speaker's reference patterns are adapted by using the mapping functions thus obtained, and inhibiting speakers are selected from the adapted inhibiting speaker's reference patterns.

Input first and second speeches (of known and unknown contents, respectively) of the true speaker are supplied to an analyzer 510. The input speeches supplied to the analyzer 510 are converted into feature vectors, which are supplied to a feature vector memory 530. Feature vector is obtained from the first speech and supplied to an estimator 540.

The estimator 540 obtains mapping functions of inhibiting speaker's feature vector spaces to the feature vector space of the true speaker, using inhibiting speaker's reference patterns supplied from the inhibiting speaker's reference pattern memory 520 and the first speech feature vector of the true speaker, supplied from the feature vector memory 530. The mapping functions thus obtained are supplied to an adapter 550.

The adapter 550 adapts the reference patterns supplied from the inhibiting speaker's reference pattern memory 520 on the basis of the mapping functions supplied from the estimator 540. The adapted reference patterns are supplied to an alignment estimator 560.

The alignment estimator 560 estimates alignments of the second speech feature vector of the true speaker, supplied from the feature vector memory 530 using the reference patterns supplied from the adapter 550. The alignment estimator 560 then generates inhibiting speaker's reference patterns corresponding to the second speech of the true speaker by connecting the reference patterns supplied from the adapter 550 in the order of phone corresponding to the estimated alignments. The inhibiting speaker's reference patterns thus generated are supplied to an inhibiting speaker selector 570.

The inhibiting speaker selector 570 calculates distances between the second speech feature vector of the true speaker and the reference patterns supplied from the alignment estimator 560, and selects inhibiting speaker's reference patterns in the order of smaller distances thereof. The selected inhibiting speaker's reference patterns are provided as output.

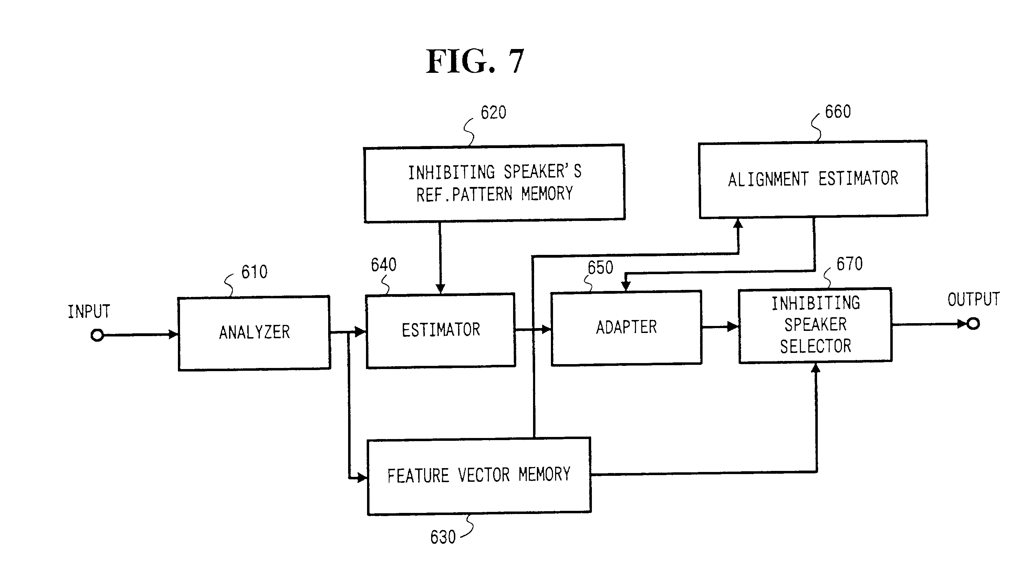

Fig. 7 is a view showing a seventh embodiment of the invention. In this embodiment mapping functions from inhibiting speaker's feature vector spaces to feature vector space of the true speaker are obtained by using a first speech (of known content) of the true speaker, inhibiting speaker's reference patterns corresponding to a second speech (of unknown content) of the true speaker are generated by using previously obtained inhibiting speaker's reference patterns, the newly obtained inhibiting speaker's reference patterns are adapted, and inhibiting speakers are selected after the adaptation.

Input first and second speeches (of known and unknown contents, respectively) of the true speaker are supplied to an analyzer 610. The input speeches supplied to an analyzer 610 are converted into feature vectors, which are supplied to a feature vector memory 630. Also, first speech feature vector is supplied to an estimator 640.

The estimator 640 obtains mapping functions from inhibiting speaker's feature vector spaces to feature vector space of the true speaker. The mapping functions thus obtained are supplied to an adapter 650.

An alignment estimator 660 estimates alignments of the first speech feature vector of the true speaker, supplied from the analyzer 610 using reference patterns supplied from inhibiting speaker's reference pattern memory 620. The mapping functions thus obtained are supplied to the adapter 650.

The adapter 650 adapts the inhibiting speaker's reference patterns generated in the alignment estimator 660 on the basis of the mapping functions supplied from the estimator 640. The adapted reference patterns are supplied to an inhibiting speaker selector 670.

The inhibiting speaker selector 670 calculates distances between the adapted reference patterns and second speech feature vector of the true speaker, supplied from the feature vector memory 630, and selects inhibiting speaker's reference patterns in the order of smaller distances thereof. The selected inhibiting speaker's reference patterns are provided as output.

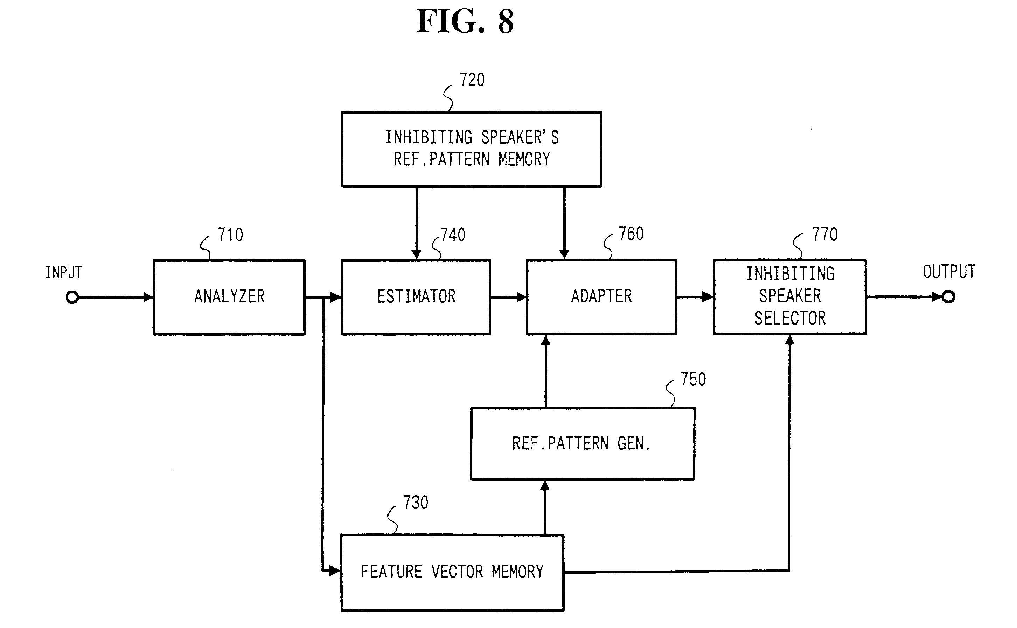

Fig. 8 is a view showing an eighth embodiment of the invention. In this embodiment, mapping functions from the feature vector space of the true speaker to inhibiting speaker's feature vector spaces are obtained, the reference pattern of the true speaker is adapted by using the mapping functions thus obtained, and inhibiting speakers are selected after the adaptation.

Input speech of the true speaker is supplied to an analyzer 710. The input speech supplied to the analyzer 710 is converted into feature vector, which is supplied to a feature vector memory 730 and an estimator 740.

The estimator 740 obtains mapping functions from the feature vector space of the true speaker to inhibiting speaker's feature vector spaces. The mapping functions thus obtained are supplied to an estimator 750.

A reference pattern generator 750 generates reference pattern of the true speaker by using the feature vector of the true speaker, supplied from the feature vector memory 730. The reference pattern of the true speaker thus generated in supplied to an adapter 760.

The adapter 760 adapts the reference pattern of the true speaker, supplied from the reference pattern generator 750, on the basis of the mapping functions supplied from the estimator 740. The adapted reference patterns are supplied to an inhibiting speaker selector 770.

The inhibiting speaker selector 770 calculates distances between the adapted reference patterns supplied from the adapter 760 and the feature vector of the true speaker, supplied from the feature vector memory 730, and selects adapted inhibiting speaker's reference patterns in the order of smaller distances thereof. The selected inhibiting speaker's reference patterns are provided as output. This method may also be applied to the case where different contents are uttered at the time of the mapping function estimation and at the time of the adaptation.

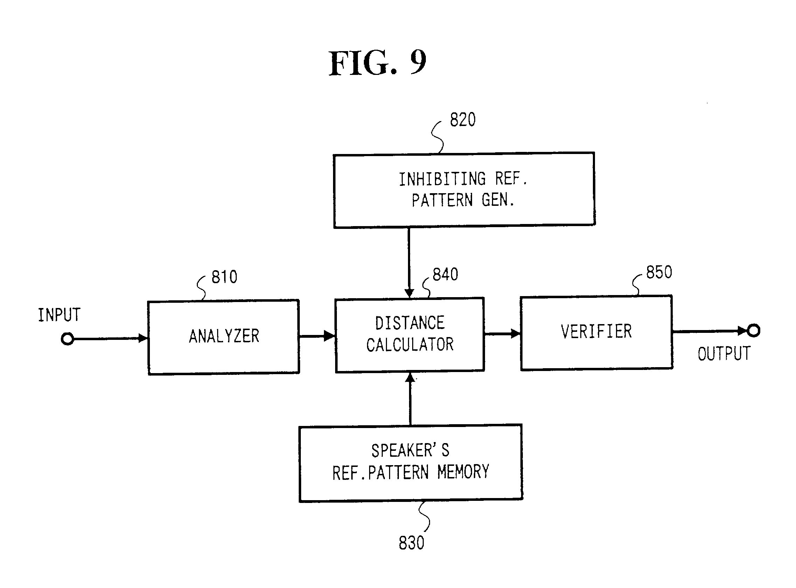

Fig. 9 is a view showing a speaker verification system for carrying out the embodiments of the inhibiting speaker's reference pattern generating system described before with reference to Figs. 1 to 8.

Input speech of the speaker to be verified is supplied to an analyzer 810. The input speech supplied to the analyzer 810 is converted into feature vector, which is supplied to a distance calculator 840.

An inhibiting speaker's reference pattern generator 820 generates inhibiting speaker's reference patterns by using either of the above embodiments of the method. The generated inhibiting speaker's reference patterns are supplied to the distance calculator 840.

The distance calculator 840 first calculates distance between reference pattern of the true speaker, supplied from a reference pattern memory 830, and feature vector of the speaker to be verified, supplied from the analyzer 810. The result of the calculation is referred to as distance 1. Then, the distance calculator 840 calculates distance between the inhibiting speaker's reference patterns supplied from the inhibiting speaker's reference pattern generator 820 and the feature vector of the speaker to be verified. The results of the calculation is referred to as distances 2. The distance calculator 840 then normalizes distances (or likelihoods) by subtracting the distances 2 from the distance 1. The normalized distances (or likelihoods) are supplied to a verifier 850.

The verifier 850 compares the distances (or likelihoods) supplied from the distance calculator 840 with a predetermined threshold value. When the compared distance is not greater than the threshold, (when the compared likelihood is greater), the verifier 850 determines that the speaker is the true speaker. When the compared distance is greater, (when the compared likelihood is not greater), the verifier 850 determines that the speaker is not true speaker.

As has been described in the foregoing, according to the invention it is possible to obtain high speaker verification accuracy with fewer inhibiting speaker's reference patterns even when the speaker verification is performed in connection with different environments at the time of registration and at the time of verification. In addition, it is possible to produce accurate inhibiting speaker's reference patterns even when different words are uttered by the true speaker and inhibiting speakers.

Changes in construction will occur to those skilled in the art and various apparently different modifications and embodiments may be made without departing from the scope of the present invention. The matter set forth in the foregoing description and accompanying drawings is offered by way of illustration only. It is therefore intended that the foregoing description be regarded as illustrative rather than limiting.

## Claims

1. An inhibiting speaker's reference pattern generating system comprising:

   an analyzer for converting an input speech of the true speaker into feature vectors;
   a feature vector memory for storing the feature vector obtained in the analyzer;
   an inhibiting speaker's reference pattern memory with one or more inhibiting speaker's reference patterns stored therein;
   an inhibiting speaker selector for calculating similarity or similarities between the inhibiting speaker's reference pattern or patterns stored in the inhibiting speaker's reference pattern memory and the feature vector obtained in the analyzer and selecting one or more inhibiting speakers;
   an estimator for obtaining mapping function or functions from inhibiting speaker's feature vector space or spaces to feature vector space of the true speaker, by using the selected inhibiting speaker's reference pattern or patterns and the feature vector of the true speaker, stored in the feature vector memory; and
   an adapter for adapting the inhibiting speaker's reference pattern or patterns stored in the inhibiting speaker's reference pattern memory on the basis of the mapping function or functions obtained in the estimator.

2. An inhibiting speaker's reference pattern generating system comprising:

   an analyzer for converting an input speech of the true speaker into feature vectors;
   a feature vector memory for storing the feature vector obtained in the analyzer;
   an inhibiting speaker's reference pattern memory with one or more inhibiting speaker's reference patterns stored therein;
   an inhibiting speaker selector for calculating similarity or similarities between the inhibiting speaker's reference pattern or patterns stored in the inhibiting speaker's reference pattern memory and the feature vector obtained in the analyzer and selecting one or more inhibiting speakers;
   an estimator for obtaining mapping function or functions from inhibiting speaker's feature vector space of spaces to feature vector space of the true speaker, by using the selected inhibiting speaker's reference pattern or patterns and feature vector of the true speaker, obtained from a first speech of known content stored in the feature vector memory;
   an adapter for adapting the inhibiting speaker's reference pattern or patterns stored in the inhibiting speaker's reference pattern memory on the basis of the mapping function or functions obtained in the estimator;
   an alignment estimator for estimating alignment or alignments of feature vector of the true speaker, obtained from a second speech of unknown content thereof stored in the feature vector memory, by using the adapted inhibiting speaker's reference pattern or patterns obtained in the adapter, and creating inhibiting speaker's reference pattern or patterns corresponding to the second speech on the basis of the estimated alignment or alignments.

3. An inhibiting speaker's reference pattern generating system comprising:

an analyzer for converting an input speech of the true speaker into feature vectors;
a feature vector memory for storing the feature vector obtained in the analyzer;
an inhibiting speaker's reference pattern memory with one or more inhibiting speaker's reference patterns stored therein;
an inhibiting speaker selector for calculating similarity or similarities between the inhibiting speaker's reference pattern or patterns stored in the inhibiting speaker's reference pattern memory and the feature vector obtained in the analyzer and selecting one or more inhibiting speakers;
an estimator for obtaining mapping function or functions from inhibiting speaker's feature vector space of spaces to feature vector space of the true speaker, by using the selected inhibiting speaker's reference pattern or patterns and feature vector of the true speaker, obtained from a first speech of known content thereof stored in the feature vector memory;
an alignment estimator for estimating alignment or alignments of feature vector of the true speaker, obtained from a second speech of unknown content thereof stored in the feature vector memory, by using reference pattern or patterns of the inhibiting speaker or speakers selected in the inhibiting speaker selector, and generating inhibiting speaker's reference pattern or patterns corresponding to the second speech on the basis of the estimated alignment or alignments;
an adapter for adapting the inhibiting speaker's reference pattern or patterns generated in the alignment estimator on the basis of the estimated mapping function or functions.

4. An inhibiting speaker's reference pattern generating system comprising:

an analyzer for converting an input speech of the true speaker into feature vectors;
a feature vector memory for storing the feature vector obtained in the analyzer;
an inhibiting speaker's reference pattern memory with one or more inhibiting speaker's reference patterns stored therein;
an inhibiting speaker selector for calculating similarity or similarities between the inhibiting speaker's reference pattern or patterns stored in the inhibiting speaker's reference pattern memory and the feature vector obtained in the analyzer and selecting one or more inhibiting speakers;
an estimator for obtaining mapping function or functions from feature vector space of the true speaker to inhibiting speaker's feature vector space of spaces, by using the selected inhibiting speaker's reference pattern or patterns and feature vector of the true speaker stored in the feature vector memory;
a reference pattern generator for creating reference pattern of the true speaker by using the feature vector stored in the feature vector memory; and
an adapter for adapting the true speaker's reference pattern or patterns obtained in the reference pattern generator on the basis of the mapping function or functions obtained in the estimator.

5. The inhibiting speaker's reference pattern generating system according to one of claims 1 to 4, wherein one or more inhibiting speaker's reference patterns each containing features of two or more speakers are stored in the inhibiting speaker's reference pattern memory.

6. An inhibiting speaker's reference pattern generating system comprising:

an analyzer for converting an input speech of the true speaker into feature vectors;
a feature vector memory for storing the feature vector obtained in the analyzer;
an inhibiting speaker's reference pattern memory with one or more inhibiting speaker's reference patterns stored therein;
an estimator for obtaining mapping function or functions from inhibiting speaker's feature vector space or spaces to feature vector space of the true speaker by using the feature vector obtained in the analyzer and the inhibiting speaker's reference pattern or patterns stored in the inhibiting speaker's reference pattern memory;
an adapter for adapting the inhibiting speaker's reference pattern or patterns stored in the inhibiting speaker's reference pattern memory on the basis of the mapping function or functions obtained in the estimator; and

inhibiting speaker selector for calculating similarities between the adapted reference pattern or patterns obtained in the adapter and the feature vector of the true speaker, stored in the feature vector memory, and selecting one or more inhibiting speakers.

7. An inhibiting speaker's reference pattern generating system comprising:

an analyzer for converting an input speech of the true speaker into feature vectors;
a feature vector memory for storing the feature vector obtained in the analyzer;
an inhibiting speaker's reference pattern memory with one or more inhibiting speaker's reference patterns stored therein;
an estimator for estimating mapping function or functions from inhibiting speaker's feature vector space or spaces to feature factor of the true speaker, by using the converted feature vector of the true speaker, obtained from a first speech of known content and the inhibiting speaker's reference pattern or patterns stored in the inhibiting speaker's reference pattern memory;
an adapter for adapting the inhibiting speaker's reference pattern or patterns stored in the inhibiting speaker's reference pattern memory on the basis of the mapping function or functions obtained in the estimator;
an alignment estimator for estimating alignment or alignments of feature vector of the true speaker, obtained from a second speech of unknown content stored in the feature vector memory, by using the adapted reference pattern or patterns obtained in the adapter, and generating inhibiting speaker's reference pattern or patterns corresponding to the second speech; and
an inhibiting speaker selector for calculating similarity or similarities between the inhibiting speaker's reference pattern and patterns generated in the alignment estimator to the second speech feature vector of the true speaker, stored in the feature vector memory, and selecting one or more inhibiting speakers.

8. An inhibiting speaker's reference pattern generating system comprising:

an analyzer for converting an input speech of the true speaker into feature vectors;
a feature vector memory for storing the feature vector obtained in the analyzer;
an inhibiting speaker's reference pattern memory with one or more inhibiting speaker's reference patterns stored therein;
an estimator for estimating mapping function or functions from inhibiting speaker's feature vector space or spaces to feature factor of the true speaker, by using the converted feature vector of the true speaker, obtained from a first speech of known content and the inhibiting speaker's reference pattern or patterns stored in the inhibiting speaker's reference pattern memory;
an alignment estimator for estimating alignment or alignments of feature vector of the true speaker, obtained form a second speech of unknown content stored in the feature vector memory, by using the inhibiting speaker's reference pattern or patterns stored in the inhibiting speaker's reference memory, and creating inhibiting speaker's reference pattern or patterns corresponding to the second speech on the basis of the estimated alignment or alignments;
an adapter for adapting the reference pattern or patterns obtained in the alignment estimator by using the mapping function or functions estimated in the estimator; and
an inhibiting speaker selector for calculating similarity or similarities between the inhibiting speaker's reference pattern or patterns stored in the inhibiting speaker's reference pattern memory and the feature vector stored in the feature vector memory and selecting one or more inhibiting speakers.

9. An inhibiting speaker's reference pattern generating system comprising:

an analyzer for converting an input speech of the true speaker into feature vectors;
a feature vector memory for storing the feature vector obtained in the analyzer;
an inhibiting speaker's reference pattern memory with one or more inhibiting speaker's reference patterns stored therein;
an estimator for obtaining mapping function or functions from feature vector space of the true speaker to inhibiting speaker's feature vector space or spaces, by using the converted feature vector obtained in the analyzer and the inhibiting speaker's reference pattern or patterns stored in the inhibiting speaker's reference pattern memory;
a reference pattern generator for generating reference pattern of the true speaker by using the feature vector of the true speaker, stored in the feature vector memory;
an adapter for adapting the reference pattern of the true speaker, obtained in the reference pattern generator,

on the basis of the mapping function or functions obtained in the estimator; and
an inhibiting speaker selector for calculating similarity or similarities between the adapted reference pattern or patterns obtained in the adapter and the feature vector of the true speaker, stored in the feature vector memory, and selecting one or more inhibiting speakers.

**10.** The inhibiting speaker's reference pattern generating system according to one of claims 6 to 9, wherein one or more inhibiting speaker's reference patterns each containing features of two or more speakers are stored in the inhibiting speaker's reference pattern memory.

**11.** A speaker verifying system comprising:

an analyzer for converting an input speech of the true speaker into feature vectors;
an inhibiting reference pattern generator including the feature vector memory, inhibiting speaker reference pattern memory, inhibiting speaker selector, estimator, adapter and reference pattern generator in one of the claims 1 to 10;
a speaker's reference pattern memory with one or more speaker's reference patterns stored therein;
a distance calculator for normalizing distance or distances by subtracting the distance between the feature vector or vectors and the reference pattern or patterns of the inhibiting speaker or speakers from the distance difference between the feature vector and the reference pattern of the true speaker using the converted feature vector of the true speaker, the inhibiting speaker's reference pattern or patterns generated in the inhibiting speaker's reference pattern generator and the reference pattern of the true speaker, stored in a reference pattern memory; and
a verifier for verifying the true speaker on the basis of the normalized distance or distances calculated in the distance calculator.

**12.** An inhibiting speaker's reference pattern generating method comprising steps of:

(a) converting an input speech of the true speaker into feature vectors;
(b) storing the converted feature vector in a feature vector memory;
(c) calculating similarity or similarities between the inhibiting speaker's reference pattern or patterns stored in an inhibiting speaker's reference pattern memory and the converted feature vector and selecting one or more inhibiting speakers;
(d) obtaining mapping function or functions from inhibiting speaker's feature vector space or spaces to feature vector space of the true speaker by using the selected inhibiting speaker's reference pattern or patterns and the stored feature vector of the true speaker; and
(e) adapting the inhibiting speaker's reference pattern or patterns stored on the basis of the obtained mapping function or functions.

**13.** An inhibiting speaker's reference pattern generating method comprising steps of:

(a) converting an input speech of the true speaker into feature vectors;
(b) storing the converted feature vector obtained in a feature memory;
(c) calculating similarity or similarities between the inhibiting speaker's reference pattern or patterns stored in the inhibiting speaker's reference pattern memory and the feature vector obtained in the analyzer and selecting one or more inhibiting speakers;
(d) obtaining mapping function or functions from inhibiting speaker's feature vector space or spaces to feature vector space of the true speaker by using the selected inhibiting speaker's reference pattern or patterns and the stored feature vector of the true speaker which is obtained from a first speech of known content thereof; and
(e) adapting the inhibiting speaker's reference pattern or patterns stored on the basis of the obtained mapping function or functions.
(f) estimating alignment or alignments of feature vector of the true speaker, obtained from a second speech of unknown content thereof stored in the feature vector memory, by using the adapted inhibiting speaker's reference pattern or patterns, and creating inhibiting speaker's reference pattern or patterns corresponding to the second speech on the basis of the estimated alignment or alignments.

**14.** An inhibiting speaker's reference pattern generating method comprising steps of:

(a) converting an input speech of the true speaker into feature vectors;

(b) storing the converted feature vector obtained in a feature memory;

(c) calculating similarity or similarities between the inhibiting speaker's reference pattern or patterns stored in the inhibiting speaker's reference pattern memory and the feature vector obtained in the analyzer and selecting one or more inhibiting speakers;

(d) obtaining mapping function or functions from inhibiting speaker's feature vector space or spaces to feature vector space of the true speaker by using inhibiting speaker's reference pattern or patterns and the stored feature vector of the true speaker which is obtained from a first speech of known content thereof;

(e) estimating alignment or alignments of feature vector of the true speaker, obtained from a second speech of unknown content thereof stored in the feature vector memory, by using reference pattern or patterns of the inhibiting speaker or speakers selected, and generating inhibiting speaker's reference pattern or patterns corresponding to the second speech on the basis of the estimated alignment or alignments; and

(f) adapting the inhibiting speaker's reference pattern or patterns generated on the basis of estimated alignment or alignments.

15. An inhibiting speaker's reference pattern generating method comprising steps of:

(a) converting an input speech of the true speaker into feature vectors;

(b) storing the converted feature vector in a feature vector memory;

(c) calculating similarity or similarities between the inhibiting speaker's reference pattern or patterns stored in an inhibiting speaker's reference pattern memory and the converted feature vector and selecting one or more inhibiting speakers;

(d) obtaining mapping function or functions from feature vector space of the true speaker to inhibiting speaker's feature vector space or spaces by using the selected inhibiting speaker's reference pattern or patterns and the stored feature vector of the true speaker;

(e) creating reference pattern of the true speaker, stored in the feature vector memory, by using the feature vector; and

(f) adapting the produced reference pattern of the true speaker on the basis of the estimated mapping function.

16. The inhibiting speaker's reference pattern generating method according to one of claims 12 to 15, wherein one or more inhibiting speaker's reference patterns each containing features of two or more speakers are stored in the inhibiting speaker's reference pattern memory.

17. An inhibiting speaker's reference pattern generating method comprising steps of:

(a) converting an input speech of the true speaker into feature vectors;

(b) storing the converted feature vector in a feature vector memory;

(c) obtaining mapping function or functions from inhibiting speaker's feature vector space or spaces to feature vector space of the true speaker by using the converted feature vector and the inhibiting speaker's reference pattern or patterns stored in an inhibiting speaker's reference pattern memory;

(d) adapting the inhibiting speaker's reference pattern or patterns stored in the inhibiting speaker's reference pattern memory on the basis of the estimated mapping function or functions;

(e) calculating similarity or similarities between the adapted reference pattern or patterns and the feature vector of the true speaker, stored in the feature vector memory; and

(f) selecting one or more inhibiting speakers.

18. An inhibiting speaker's reference pattern generating method comprising steps of:

(a) converting an input speech of the true speaker into feature vectors;

(b) storing the converted feature vector in a feature vector memory;

(c) estimating mapping function or functions from inhibiting speaker's feature vector space or spaces to feature factor of the true speaker by using the converted feature vector of the true speaker, obtained from a first speech of known content thereof and the inhibiting speaker's reference pattern or patterns stored in the inhibiting speaker's reference pattern memory;

(d) adapting the inhibiting speaker's reference pattern or patterns stored in the inhibiting speaker's reference pattern memory on the basis of the estimated mapping function or functions;

(e) estimating alignment or alignments of feature vector of the true speaker, obtained from a second speech (of unknown content) thereof stored in the feature vector memory, by using the adapted reference pattern or patterns, and generating inhibiting speaker's reference pattern or patterns corresponding to the second speech on the basis of the estimated alignment or elements;

(f) calculating similarity or similarities between the generated inhibiting speaker's reference pattern or patterns and the second speech feature vector of the true speaker, stored in the feature vector memory; and

(g) selecting one or more inhibiting speakers.

**19.** An inhibiting speaker's reference pattern generating method comprising steps of:

(a) converting an input speech of the true speaker into feature vectors;

(b) storing the converted feature vector in a feature vector memory;

(c) estimating mapping function or functions from inhibiting speaker's feature vector space or spaces to feature factor of the true speaker by using the converted feature vector of the true speaker, obtained from a first speech of known content thereof and the inhibiting speaker's reference pattern or patterns stored in the inhibiting speaker's reference pattern memory;

(d) estimating alignment or alignments of feature vector of the true speaker, obtained form a second speech of unknown content thereof, stored in the feature vector memory, by using the inhibiting speaker's reference pattern or patterns stored in the inhibiting speaker's reference memory, and creating inhibiting speaker's reference pattern or patterns corresponding to the second speech on the basis of the estimated alignment or alignments;

(e) adapting the produced reference pattern or patterns by using the estimated mapping function or functions; and

(f) calculating similarity or similarities between the adapted inhibiting speaker's reference pattern or patterns and the feature vector of the true speaker, stored in the feature vector memory and selecting one or more inhibiting speakers.

**20.** An inhibiting speaker's reference pattern generating method comprising steps of:

(a) converting an input speech of the true speaker into feature vectors;

(b) storing the converted feature vector in a feature vector memory;

(c) obtaining mapping function or functions from feature vector space of the true speaker to inhibiting speaker's feature vector space or spaces stored in an inhibiting speaker's reference pattern memory by using the converted feature vector and the speaker's reference pattern or patterns stored in the inhibiting speaker's reference pattern memory;

(d) generating reference pattern of the true speaker by using the feature vector of the true speaker, stored in the feature vector memory;

(e) adapting the reference pattern of the true speaker on the basis of the obtained mapping function or functions; and

(f) calculating similarity or similarities between the adapted reference pattern or patterns and the feature vector of the true speaker, stored in the feature vector memory; and

(g) selecting one or more inhibiting speakers.

**21.** The inhibiting speaker's reference pattern generating method according to one of claims 17 to 20, wherein one or more inhibiting speaker's reference patterns each containing features of two or more speakers are stored in the inhibiting speaker's reference pattern memory.

**22.** A recording medium storing program which is to be performed by a processor according to the method defined in one of claim 1 to 21.

# FIG. 1

# FIG. 2

INPUT → ANALYZER (110) → INHIBITING SPEAKER SELECTOR (140) → ESTIMATOR (150) → ADAPTER (160)

INHIBITING SPEAKER'S REF.PATTERN MEMORY (120)

FEATURE VECTOR MEMORY (130)

ALIGNMENT ESTIMATOR (170) → OUTPUT

EP 0 858 068 A2

# FIG. 3

# FIG. 4

EP 0 858 068 A2

# FIG.5

420

```
┌─────────────────────────┐
│   INHIBITING SPEAKER'S   │
│   REF.PATTERN MEMORY     │
└─────────────────────────┘
```

410                    440              450              460

INPUT

```
┌──────────┐   ┌──────────┐   ┌──────────┐   ┌────────────┐
│ ANALYZER │   │ ESTIMATOR│   │ ADAPTER  │   │ INHIBITING │   OUTPUT
│          │   │          │   │          │   │  SPEAKER   │
│          │   │          │   │          │   │  SELECTOR  │
└──────────┘   └──────────┘   └──────────┘   └────────────┘
```

```
┌──────────────────────┐
│ FEATURE VECTOR MEMORY │
└──────────────────────┘
```

430

# FIG. 6

# FIG. 7

EP 0 858 068 A2

# FIG. 8

# FIG. 9

EP 0 858 068 A2

# FIG. 10

INHIBITING SPEAKER'S REF.PATTERN MEMORY — 1020

INPUT

ANALYZER — 1010

INHIBITING SPEAKER SELECTOR — 1030

OUTPUT